Europäisches Patentamt

European Patent Office

Office européen des brevets

(19)

(11) Veröffentlichungsnummer : **0 007 622**
**B1**

(12) **EUROPÄISCHE PATENTSCHRIFT**

(45) Veröffentlichungstag der Patentschrift :
03.02.82

(21) Anmeldenummer : 79102629.7

(22) Anmeldetag : 24.07.79

(51) Int. Cl.³ : **H 02 J 13/00, A 61 C 1/06,**
**H 04 B 3/54**.

(54) Schaltungsanordnung zur Drehrichtungsumkehr eines Gleichstrommotors.

(30) Priorität : 31.07.78 DE 2833508

(43) Veröffentlichungstag der Anmeldung :
06.02.80 (Patentblatt 80/03)

(45) Bekanntmachung des Hinweises auf die Patenterteilung : 03.02.82 Patentblatt 82/05

(84) Benannte Vertragsstaaten :
AT CH FR GB IT

(56) Entgegenhaltungen :
CH - A - 377 909
DE - A1 - 2 719 813
DE - B2 - 1 780 226
US - A - 2 323 645

(73) Patentinhaber : SIEMENS AKTIENGESELLSCHAFT
Berlin und München
Postfach 22 02 61
D-8000 München 22 (DE)

(72) Erfinder : Kissel, Heinz
Kiesstrasse 11
D-6084 Gernsheim (DE)
Erfinder : Pabst, Josef
Dormheimer-Ring 7
D-6800 Mannheim (DE)

## Schaltungsanordnung zur Drehrichtungsumkehr eines Gleichstrommotors

Die Erfindung bezieht sich auf eine Schaltungsanordnung zur Drehrichtungsumkehr eines Gleichstrommotors, insbesondere eines Gleichstromkleinstmotors für den Antrieb zahnärztlicher Werkzeuge.

Insbesondere in der Dentaltechnik, wo man zum Antrieb von Bohr- oder Schleifwerkzeugen kleine, in einem Handgriff angeordnete Gleichstrommotoren verwendet, ist es störend, die Drehrichtung des Antriebsmotors extern des Handgriffes z.B. am Motorversorgungteil oder mittels eines Fußschalters umschalten zu müssen, wie dies beispielsweise bei einer Dentaleinheit gemäß der DE-A-11 15 408 der Fall ist, wo zur Drehrichtungsbestimmung zwei Fußtrethebel vorhanden sind, mit denen der Anker des Antriebsmotors umgepolt und damit die Drehrichtung umgeschaltet werden kann.

Aufgabe der Erfindung ist es, eine Schaltungsanordnung zur Drehrichtungsumkehr eines Gleichstrommotors anzugeben, die eine Drehrichtungsumkehr am Motor selbst ohne Leistungsverlust und ohne zusätzliche Schaltleitungen zwischen Motor und Versorgung bzw. einem Fußschalter ermöglicht.

Zur Lösung der gestellten Aufgabe wird gemäß der Erfindung vorgeschlagen, daß der Motorspannung mittels eines Impulsgenerators eine hochfrequente Wechselspannung überlagert ist, daß in den Stromkreis des Gleichstrommotors einerseits ein die überlagerte Spannung gegen die Motorversorgung abblockendes Sperrglied und andererseits ein Schaltelement eingeschaltet, ist, welches Schaltelement bei Betätigung dem Gleichstrommotor einen Kondensator parallelschaltet, wodurch in der Steuerleitung des Impulsgenerators ein Spannungssprung erzeugt wird, und daß eine den Spannungssprung in einen Schaltimpuls umsetzende Schaltstufe vorhanden ist, welche über ein Relais die Motorklemmen umpolt.

Ein wesentlicher Vorzug der erfindungsgemäßen Schaltungsanordnung ist, daß die ohnehin vorhandene Versorgungsleitung als Informationsträger für die Drehrichtungsumkehr benutzt wird, so daß keine zusätzlichen Steuerleitungen, Anschlußklemmen u. dgl., die die Gehäuseabmessungen bzw. die Querschnitte für die Versorgungsleitung vergrößern würden, erforderlich sind.

Aus der CH-A-377 909 ist es zwar bei Eisenbahnzügen bekannt, als Informationsträger zur Signalübertragung die Heizleitung des Zuges zu benutzen ; dieser Stand der Technik liegt aber vom Anmeldungsgegenstand sowohl von der Gattung als auch von der Aufgabenstellung her gesehen zu weit entfernt, als daß der Fachmann sich hieraus Anregungen zur Lösung der vorliegenden Aufgabe hätte nehmen können.

Vorteilhafte Ausgestaltungen und Weiterbildungen der Erfindung sind in den abhängigen Ansprüchen enthalten. Ein besonderer Vorzug ergibt sich bei Anwendung der Schaltungsanordnung nach Anspruch 2 in der Dentaltechnik für die eingangs erwähnten Handstückmotoren, da bei solchen Motoren die Induktivität sehr niedrig ist.

Ein Ausführungsbeispiel der Erfindung wird anhand der Zeichnung näher erläutert.

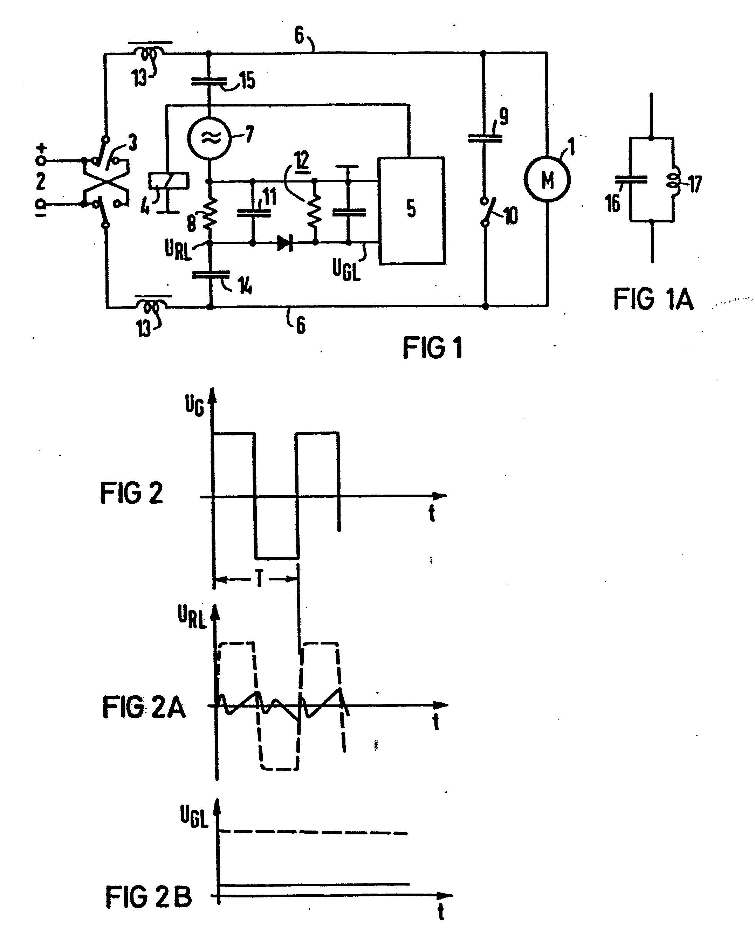

Die Fig. 1 zeigt eine Schaltungsanordnung für einen Gleichstrommotor 1, dem über eine Spannungsquelle 2 Gleichspannung zugeführt wird. Die Umschaltung der Drehrichtung erfolgt über Umschaltkontakte 3 eines Relais 4, das von einer Schaltstufe 5 aus gesteuert wird. Die Zuführung der Versorgungsspannung erfolgt über eine Leitung 6. Der Gleichspannung aus der Spannungsquelle 2 wird eine Rechteckspannung sehr hoher Frequenz (ca. 1 MHz) überlagert, die von einem Impulsgenerator 7 erzeugt wird. In den Steuerkreis des Impulsgenerators 7 ist ein ohmscher Widerstand 8 von etwa 100 Ohm angeordnet, der zusammen mit einem parallel zum Gleichstrommotor 1 liegenden Kondensator 9 ein RC-Glied bildet. Der Kondensator 9 wird mittels eines Schalters 10 parallel zu den Motorklemmen geschaltet.

Parallel zum ohmschen Widerstand 8 liegt ein die hohen Frequenzen unterdrückender Glättungskondensator 11 sowie eine Gleichrichterstufe 12. Mit 13 sind Drosseln bezeichnet, die die Aufgabe haben, die überlagerten Rechteckspannungen gegen die Spannungsquelle 2 abzublocken. Die weiteren, im Steuerkreis des Impulsgenerators 7 liegenden Kondensatoren 14 und 15 dienen zum Ein- und Auskoppeln des Rechtecksignals auf die Versorgungsleitung 6 und stellen für die gewählte Frequenz einen Kurzschluß dar.

Der Impulsgenerator 7 liefert eine periodische Rechteckfrequenz, die der Leitung 6 der Versorgungsspannung überlagert ist. Die Frequenz des überlagerten Rechtecksignals ist so groß gewählt, daß sich die parasitären Motorkapazitäten (gegeben durch die Motorwicklungen) ausnutzen lassen. Im Ersatzschaltbild gemäß Fig. 1a ist diese Motorkapazität mit 16 und die an sich bei einem Mikromotor sehr kleine Induktivität mit 17 bezeichnet.

Die Fig. 2a und 2b zeigen die Differenzierimpulse, wie sie vor und nach der Gleichrichterstufe 12 erhalten werden, wobei die Fig. 2a den Spannungsverlauf bei $U_{RL}$ und die Fig. 2b den Spannungsverlauf bei $U_{GL}$ wiedergeben. Der gestrichelt eingezeichnete Spannungsverlauf entspricht dabei den Impulsen bei gedrücktem Schalter 10 und der durchgehend eingezeichnete dem geöffneten Schalter 10. Aus der Darstellung gemäß Fig. 2b ist ersichtlich, daß bei geschlossenem Schalter 10 ein sehr hoher Spannungssprung vorhanden ist, der in der Gleichrichterstufe 12 durch einen dort eingeschalteten, in der Darstellung nicht eingezeichneten Transistor ein Ansprechen des Relais 4 bewirkt.

Der ohmsche Widerstand 8 bildet mit der Kapazität des Kondensators 9 und der Motorkapazität 16 ein RC-Glied. Je nachdem, ob der Schalter 10 offen oder geschlossen ist, wirkt nur die Motorkapazität 16 alleine oder die Kapazität des Kondensators 9 plus Motorkapazität 16 als kapazitiver Teil des RC-Gliedes. Nachdem die Motorkapazität 16 ohnehin sehr klein ist, macht sich diese aber in der Addition kaum bemerkbar.

Bei geöffnetem Schalter 20 wirkt die Motorkapazität 16 in Verbindung mit dem ohmschen Widerstand 8 als Differenzierglied. Der ohmsche Widerstand 8 ist nun so gewählt, daß die Zeitkonstante ($\tau_1 = R \cdot C_{16}$) sehr viel kleiner ist als die Periodendauer T des Rechtecksignals, welches vom Impulsgenerator gemäß Fig. 2 erzeugt wird.

Bei geschlossenem Schalter 10 liegt die Motorkapazität 16 der Kapazität des Kondensators 9 parallel. Nachdem die Motorkapazität 16 relativ klein ist im Vergleich zur Kapazität des Kondensators 9, ist die Motorkapazität 16 praktisch vernachlässigbar. Die Kapazität des Kondensators 9 ist nun so gewählt, daß die sich zusammen mit dem Widerstand 8 ergebende Zeitkonstante ($\tau_2 = R \cdot C_9$) sehr viel größer ist als die Periodendauer T des Rechtecksignals. Wie aus der Fig. 2b ersichtlich ist, erhält man gegenüber der Spannung bei geöffnetem Schalter 10 einen wesentlich größeren Gleichspannungsanteil. Diese beiden Informationen werden in der Schaltstufe 5 ausgewertet. Dies kann im einfachsten Falle durch einen Transistor erfolgen, der bei Schließen des Schalters 10 und dem sich hieraus ergebenden Spannungssprung gemäß Fig. 2b ein Ansprechen des Relais 4 bewirkt, wodurch schließlich die Drehrichtung über die Umschaltkontakte 3 des Motors umgeschaltet wird.

Bei Anwendung der Schaltungsanordnung bei einem Gleichstromkleinstmotor (Mikromotor) für den Antrieb von zahnärztlichen Werkzeugen ist der Schalter 10 und der Kondensator 9, der an sich baulich sehr klein ist, im bzw. am Motorgehäuse angeordnet. Die übrigen Bauteile können separat in einem externen Gehäuse untergebracht sein.

Anstelle des Schalters 10 kann auch ein Taster vorgesehen werden. Zur Auswertung der sich dabei ergebenden Schaltimpulse ist in der Schaltstufe 5 dann ein Flip-Flop vorzusehen.

Mit einer zusätzlichen logischen Verknüpfung der Drehrichtungsumkehr mit der Versorgungsspannung des Motors kann schließlich auch ein Umschalten der Pole während des Laufes verhindert werden.

## Ansprüche

1. Schaltungsanordnung zur Drehrichtungsumkehr eines Gleichstrommotors, insbesondere eines Gleichstromkleinstmotors für den Antrieb zahnärztlicher Werkzeuge, dadurch gekennzeichnet, daß der Motorspannung mittels eines Impulsgenerators (7) eine hochfrequente Wechselspannung ($U_G$) überlagert ist, daß in den Stromkreis des Gleichstrommotors (1) einerseits ein die überlagerte Spannung gegen die Motorversorgung (Spannungsquelle 2) abblockendes Sperrglied (Drossel 13) und andererseits ein Schaltelement (Schalter 10) eingeschaltet ist, welches Schaltelement bei Betätigung dem Gleichstrommotor (1) einen Kondensator (9) parallelschaltet, wodurch in der Steuerleitung des Impulsgenerators (7) ein Spannungssprung (Fig. 2b) erzeugt wird, und daß eine den Spannungssprung in einen Schaltimpuls umsetzende Schaltstufe (5) vorhanden ist, welche über ein Relais (4) die Motorklemmen umpolt.

2. Schaltungsanordnung nach Anspruch 1, dadurch gekennzeichnet, daß der Impulsgenerator (7) Rechteckspannungen mit einer Frequenz von ca. 1 MHz erzeugt, daß ein RC-Glied mit einem ohmschen Widerstand ($R_8$) und einem kapazitiven Teil ($C_9$, $C_{16}$) vorhanden ist, daß der kapazitive Teil einerseits die Motorkapazität ($C_{16}$) und andererseits der durch das Schaltelement (Schalter 10) einschaltbare Kondensator (9) ist, und daß der ohmsche und der kapazitive Teil so gewählt sind, daß bei Einschluß der Motorkapazität (16) die Zeitkonstante $\tau_1$ sehr viel kleiner und bei Einschluß der Kapazität ($C_9$) des Kondensators (9) die Zeitkonstante $\tau_2$ sehr viel größer ist als die Periodendauer (T) der Rechteckspannungen.

3. Schaltungsanordnung nach Anspruch 2, dadurch gekennzeichnet, daß dem ohmschen Widerstand (8) ein Glättungskondensator (11) parallel und diesem eine Gleichrichterstufe (12) nachgeschaltet ist.

4. Schaltungsanordnung nach Anspruch 2 oder 3, dadurch gekennzeichnet, daß sie für einen zahnärztlichen Handstückmotor vorgesehen ist, wobei das Schaltelement in Form eines Schalters (10) mit definierter Arbeitsstellung oder in Form eines Tasters und der dem Gleichstrommotor (1) parallel geschaltete Kondensator (9) am Handstückmotor angeordnet sind.

## Claims

1. A circuit arrangement for reversing the direction of rotation of a d.c. motor, in particular a d.c. miniature motor for operating dentistry tools, characterised in that a high frequency alternating voltage ($U_G$) is superimposed onto the motor voltage from a pulse generator (7), a blocking element (choke 13) isolates the superimposed voltage from the motor supply (voltage source 2) and a switching element (switch 10) connects a capacitor (9) in parallel with the d.c. motor (1) when it is operated, whereby a voltage jump (Figure 2b) is produced in the control line of the pulse generator (7), and a switching stage (5) is provided which converts the voltage jump into a switching pulse to reverse the polarity of the motor terminals via a relay (4).

2. A circuit arrangement as claimed in claim 1, characterised in that the pulse generator (7) produces rectangular voltages having a frequency of approximately 1 MHz, that a RC-element is provided which comprises a resistor ($R_8$) and a capacitive component ($C_9$, $C_{16}$), that the capacitive component consists of the motor capacitance ($C_{16}$) and the capacitance of the capacitor (9) switched by the switching element (10), and that the ohmic and capacitive components are selected to be such that with the motor capacitance (16) incorporated the time constant $\tau_1$ is very much smaller than the period (T) of the rectangular voltages, whereas with the capacitance ($C_9$) of the capacitor (9) incorporated the time constant $\tau_2$ is very much greater than the period (T).

3. A circuit arrangement as claimed in claim 2, characterised in that a smoothing capacitor (11) is connected in parallel to the resistor (8), and a rectifier stage (12) is connected following said smoothing capacitor.

4. A circuit arrangement as claimed in claim 2 or 3, characterised in that it is provided for a dentistry hand operated motor, wherein the switching element in a switch (10) having a determined operating position or a push button, and is arranged on the hand operated motor with the capacitor (9) which is connected in parallel with the d.c. motor (1).

**Revendications**

1. Montage pour l'inversion du sens de rotation d'un moteur à courant continu, plus particulièrement d'un moteur microminiature pour l'entraînement d'outils de dentisterie, caractérisé par le fait que l'on superpose à la tension du moteur, et à l'aide d'un générateur d'impulsions, une tension alternative haute fréquence ($U_G$), que dans le circuit d'alimentation du moteur à courant continu (1) on branche, d'une part, un élément de blocage (bobine de self) qui bloque la tension superposée contre l'alimentation du moteur (source de tension 2) et, d'autre part, un élément de commutation (interrupteur 10) qui, lorsqu'il est actionné, branche un condensateur (9) en parallèle sur le moteur à courant continu, ce qui conduit dans le conducteur de commande du générateur d'impulsions (7), à un saut de tension (figure 2), et qu'il est prévu un étage de commutation (5) qui transforme le saut de tension en une impulsion de commutation et qui, par l'intermédiaire d'un relais, inverse la polarité des bornes du moteur.

2. Montage selon la revendication 1, caractérisé par le fait que le générateur d'impulsions (7) produit des tensions rectangulaires d'une fréquence d'environ 1 MHz, qu'il est prévu un circuit RC avec une résistance ohmique ($R_8$) et un élément capacitif ($C_9$, $C_{16}$), que l'élément capacitif est constitué d'une part par la capacité ($C_{16}$) du moteur et d'autre part par le condensateur (9) susceptible d'être mis en circuit par l'élément de commutation (interrupteur 10) et que la partie ohmique et la partie capacitive sont choisies de telle façon que dans le cas où la capacité (16) du moteur est mise dans le circuit, la constante de temps ($\tau_1$) est beaucoup plus petite que la durée de la période (T) des tensions rectangulaires, alors que dans le cas où la capacité ($C_9$) du condensateur (9) est mise dans le circuit, la constante de temps ($\tau_2$) est beaucoup plus grande que la durée de la période (T) des tensions rectangulaires.

3. Montage selon la revendication 2, caractérisé par le fait qu'un condensateur de lissage (11) est monté en parallèle sur la résistance (8) et qu'en aval de ce condensateur de lissage (11) est monté un étage redresseur (12).

4. Montage selon la revendication 2 ou 3, caractérisé par le fait qu'il est prévu pour le moteur d'une pièce à main de dentisterie, l'élément de commutation, sous la forme d'un interrupteur (10) à position de travail déterminée, ou sous la forme d'une touche, et le condensateur (9) monté en parallèle sur le moteur à courant continu (1), étant disposé sur le moteur de la pièce à main.

FIG 1

FIG 1A

FIG 2

FIG 2A

FIG 2B